(19) Europäisches Patentamt

European Patent Office

Office européen des brevets

(11) **EP 2 375 638 A1**

(12) **EUROPEAN PATENT APPLICATION**

(43) Date of publication:
**12.10.2011 Bulletin 2011/41**

(51) Int Cl.:
***H04L 12/26*** (2006.01)  *H04L 12/56* (2006.01)

(21) Application number: **10305378.1**

(22) Date of filing: **12.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **Thomson Licensing
92130 Issy-les-Moulineaux (FR)**

• **Bsila, Amine
92443 Issy les Moulineaux cedex (FR)**
• **Bichot, Guillaume
92443 Issy les Moulineaux cedex (FR)**

(74) Representative: **Ruellan-Lemonnier, Brigitte
Technicolor
1-5 rue Jeanne d'Arc
92130 Issy-les-Moulineaux (FR)**

(72) Inventors:
• **Gouache, Stephane
92443 Issy les Moulineaux cedex (FR)**

(54) **Method for evaluating an available path bitrate based on a couple of markers inserted in a signal sent over said path**

(57) The invention relates to the field of multi-path communication. More particularly the invention deals a method for evaluating an available bitrate over a path P1 linking a first endpoint 1 and a second endpoint 2.

According to the invention, it involves a step of:
- sending by the first endpoint 1 via said path P1 successively a first marker HB1, an amount of data and a second marker HB2, the first marker HB1 and the second marker HB2 being separated by said amount of data;
- sending by the second endpoint 2 via said path P1 a first acknowledgment HBAck1 after said second endpoint 2 has received the first marker HB1;

- sending by the second endpoint 2 via said path P1 a second acknowledgment HBAck2 after said second endpoint 2 has received the second marker HB2;
- measuring by the first endpoint 1 a first arrival time t1 of the first acknowledgment HBAck1 at the first endpoint 1;
- measuring by the first endpoint 1 a second arrival time t2 of the second acknowledgment HBAck2 at the first endpoint 1;
- evaluating the available bitrate by the first endpoint 1 from a duration between the second arrival time t2 and the first arrival time t1 and from the amount of data.

Fig. 1

EP 2 375 638 A1

## Description

<u>Field Of The Invention</u>

The invention relates to the field of multi-path communication. More particularly the invention deals with a method for evaluating an available path bitrate based on a couple of markers inserted in a signal sent over said path.

<u>Background Of The Invention</u>

Multi-path communication inherits from the multi-homing capability that is about supporting several IP addresses (IP is an acronym for "Internet Protocol") to reach a given network endpoint. Problems and issues to address in multi-path technology are well known. For example, when using multiple paths to transmit information packets from a first endpoint to a second endpoint, the first endpoint must use a packet distribution strategy for balancing the data packets among the available paths linking the first and second paths. The aim of such a strategy is to select paths depending on the application (type of data) running in such endpoints and on the paths characteristic/status. The latter must be consistent with the real network state and is therefore maintained up to date through continuous measurements

Depending on the application and at least for video delivery, the following parameters are commonly used to characterize a path: bandwidth, jitter, delay. These parameters can be measured through an end-to-end measurement method, this may not be trivial as the measurement process must not perturbate the data transfer. Hereinafter, the bandwidth which is a parameter describing the ability of a path to deliver an amount of data during a time duration is the main interest and later the expression "bitrate" will be preferably used rather than the expression "bandwidth" which are considered as equivalent.

For measuring such parameters an end-to-end transport protocol like for example Stream Control Transmission Protocol (SCTP) or TCP may measure the available bitrate from a Round-trip-time (RTT) measurement, which is considered as being equal to a difference between the time of sending of a data packet by the first endpoint to the second endpoint and the arrival time of an acknowledgment packet sent by the second endpoint to the first endpoint, said acknowledgment being sent by the second endpoint immediately after it receives said data packet.

However one showed that the strategies for sending acknowledgment of data packets can affect the overall transmission as, for example in SCTP, where sending the acknowledgement of data packet through the fastest available path speeds up the overall transmission. If such a strategy is used, one cannot guaranty the acknowledgment comes back through the same path than the data itself. Then, using the acknowledgment of data for evaluating the Round-trip-time wouldn't be pertinent.

The problem is then how to measure frequently the available bitrate on a path without generating a high overload and independently of the acknowledgment of data used for managing the data delivery.

One of the goals of the present invention is to solve that problem.

<u>Summary Of The Invention</u>

The technical problem that present invention intends to solve is to measure an available bitrate over a path by measuring a time duration between arrival times at the first endpoint of a first and a second acknowledgement sent by the second endpoint. The first and second acknowledgments are sent by the second endpoint, in response respectively to the reception by said second endpoint of a first and second marker inserted in transmitted data. The first marker and the second marker are separated by a known amount of data and are sent by the first endpoint.

Thus, the present invention concerns, according to a first aspect, a method for evaluating an available bitrate over a path P1 linking a first endpoint 1 and a second endpoint 2. According to the invention, it involves a step of:

- sending by the first endpoint 1 via said path P1 successively a first marker HB1, an amount of data N and a second marker HB2, the first marker HB1 and the second marker HB2 being separated by said amount of data N;
- sending by the second endpoint 2 via said path P1 a first acknowledgment HBAck1 after said second endpoint 2 has received the first marker HB1;
- sending by the second endpoint 2 via said path P1 a second acknowledgment HBAck2 after said second endpoint 2 has received the second marker HB2;
- measuring by the first endpoint 1 a first arrival time t1 of the first acknowledgment HBAck1 at the first endpoint 1;
- measuring by the first endpoint 1 a second arrival time t2 of the second acknowledgment HBAck2 at the first endpoint 1;
- evaluating the available bitrate BR by the first endpoint 1 from an interval between the second arrival time t2 and the first arrival time t1 and from the amount of data N.

According to a second aspect, the invention concerns a device for evaluating an available bitrate BR over a path P1 linking a first endpoint 1 and a second endpoint 2, said first endpoint 1 sending data over said path P1 to said second endpoint 2, said second endpoint 2 being adapted for sending an acknowledgment HBAck1, HBAck2 immediately after it receives a marker HB1, HB2 via said path P1, characterized in that it comprises:

- Means for inserting a first marker HB1 in data before said data is sent to said second endpoint 2;
- Means for inserting a second marker HB2 in data before said data is sent to said second endpoint 2, said second marker HB2 being separated from said first marker HB1 by an amount of data N;
- Means for determining a first arrival time t1 at the first endpoint 1 of a first acknowledgment HBAck1 sent by the second endpoint 2 after it received said first marker HB1;
- Means for determining a second arrival time t1 at the first endpoint 1 of a second acknowledgment HBAck2 sent by the second endpoint 2 after it received said second marker HB2;
- Means for evaluating the available bitrate BR from an interval between the first arrival time t1 and the second arrival time t2 and from the sent amount of data N.

According to an embodiment, the first endpoint 1 and the second endpoint 2 are connected by more than one path P1, P2, P3 and a transport protocol is used for transporting data from the first endpoint 1 to the second endpoint 2 by said path P1, P2, P3.

According to an embodiment, independently of the sending of the first and second acknowledgment HBAck1, HBAck2, the first endpoint 1 receives messages from said second endpoint 2 via at least one path P1, P2, P3 for acknowledging reception of data.

According to an embodiment, the multi-path protocol is SCTP.

According to an embodiment, said first and second marker HB1, HB2 is a Heartbeat request and first and second acknowledgment HBAck1, HBAck2 is a Heartbeat acknowledgment.

According to an embodiment, said first endpoint 1 uses SCTP for sending data to said second endpoint 2.

According to an embodiment, said first marker HB1 and said second marker HB2 is a Heartbeat request and the first and second acknowledgment HBAck1, HBAck2 is a Heartbeat acknowledgment.

A first advantage of the invention is that it allows making available at sending side a measure of the available path bitrate from dedicated markers inserted in data which generate a very low extra load. This is particularly advantageous in case of evaluation available bitrate is realized at high frequency.

A second advantage of the invention resides in its easy implementation when the transmission protocol used for delivering data on said path comprises acknowledgment mechanisms.

A third advantage of the invention is that it relies on a simple mechanism of acknowledgment which is decoupled from the acknowledgment mechanisms carried out for data transfer. This latter then can be used independently for improving the overall transmission.

**Brief Description Of The Drawings**

The invention will be better understood and illustrated by means of the following embodiments and execution examples, in no way limitative, with reference to the appended figures on which:

Figure 1, represents a first and a second endpoint linked by paths P1, P2, P3;
Figure 2a, represents on a time graph the instants of sending of first and second markers by a first endpoint;
Figure 2b, represents on a time graph the instants of reception of first and second markers by the second endpoint;
Figure 2c, represents on a time graph the instants of sending of first and second acknowledgments by a first endpoint;
Figure 2d, represents on a time graph the instants of reception of first and second acknowledgments by the first endpoint.

**Detailed Description Of Preferred Embodiments**

It is to be understood that the figures and descriptions of the present invention have been simplified to illustrate elements that are relevant for a clear understanding of the present invention, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications known to those skilled in the art.

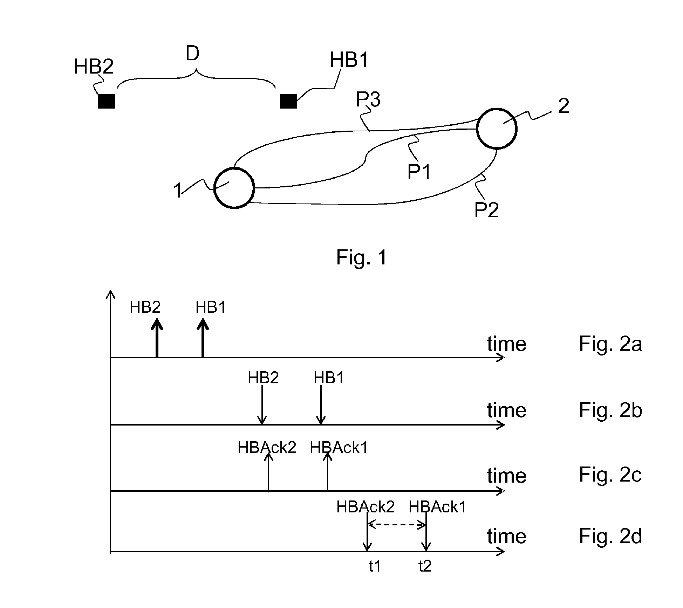

Figure 1 shows a first endpoint 1 and a second endpoint 2 linked by three paths P1, P2, P3. Advantageously, a multi-path protocol is used for connecting the first endpoint 1 to the second endpoint 2 over the path P1, P2, P3.

One wishes to measure the bitrate on the path P1 in a situation where path P1 is currently used for sending data from first endpoint 1 to second endpoint 2.

Let's consider an amount of data D to be sent over the path P1 for example under the form of packet. The first endpoint 1 sends a first marker HB1, immediately followed by data packets (also named "chunks") carrying the data D. The data D is immediately followed by a second marker noted HB2. The first and second marker and data are sent over the path P1.

Advantageously, the first and second markers HB1, HB2 are inserted respectively at the beginning ant at the end of the data to be sent. This insertion is carried out chronologically before the emission time.

A representation of information successively sent over the path P1 is shown on the top of figure 1 where dark boxes show respectively first and second marker HB1, HB2 as particular chunks separated by a known amount of bytes N being split into data chunks (shown as white boxes").

The first endpoint 1 computes the amount N of data sent in between the first marker HB1 and second marker HB2 by analyzing the whole data transferred from the first endpoint 1 to the second endpoint 2. The amount N of data is a sum of an amount NB of data to be sent and of an amount NO of overhead. e.g. NB is a number of bytes of data D located in the data chunks. NO is a number NO of bytes of overhead. N = NB+NO

The figure 2a shows in a temporal graph the instant of sending of the first and second marker HB1, HB2 from the first endpoint 1 with up-arrows.

The first and second marker HB1, HB2 reaches successively the second endpoint 2 as represented in figure 2b with down-arrows

Upon reception of the first marker HB1, the endpoint 2 sends in response to the first marker reception a first acknowledgement HBAck1, through the path P1, independently from the acknowledgements for the data.

Advantageously, the second endpoint 2 sends the acknowledgment via the path P1 via which it receives the marker due to a specific requirement comprised in a transport protocol used for transmitting data from the first endpoint 1 to the second endpoint 2.

Similarly, when the second endpoint 2 gets the second marker HB2, it sends immediately, in return, a second acknowledgement HBAck2 though the same path P1 as well.

Advantageously, the second endpoint 2 sends an acknowledgment in response to a marker reception; it determines the path by which it sends said acknowledgment by analyzing information comprised in the marker it received.

The figure 2c shows in a temporal graph the instant of sending of the first and second acknowledgement HBAck1, HBAck2 from the second endpoint 2, with up-arrows. Ideally, the acknowledgments are sent by the second endpoint 2 immediately after the reception of the marker. Herein, "immediately" means that any possibly occurring delay is, in essence, depending on software-related and/or hardware-related processing.

The first and second acknowledgement HBAck1, HBAck2 reaches successively the first endpoint 1 as represented in figure 2d with down-arrows.

The first endpoint 1 receiving the first acknowledgment HBAck1 determines its arrival time t1. The first endpoint 1 receiving second acknowledgment HBAck2 determines its arrival time t2. The first endpoint 1 evaluates the available bitrate BR from an interval between the second arrival time t2 and the first arrival time t1 and from the amount of data N.

For example, the first endpoint 1 can then compute the current available bitrate BR on path P1 expressed in number of bit per second, when t1 and t2 are expressed in second, using the following formula:

$$BR = 8NB/(t2-t1)$$

The measurement can be performed for example once every 2 seconds to avoid overloading the network with measurement messages. The data D is acknowledged independently (e.g. using delayed acknowledgments) from the markers/acknowledgments.

In case the used multi-path protocol is SCTP, one knows from the paragraphs 3.3.5 and 3.3.6 of the technical document "RFC 4960 - Stream Control Transmission Protocol" which can be found on the internet at the following address "http://tools.ietf.org/html/rfc4960" and from the paragraph 5.3 of the technical document "RFC 5061 - SCTP Dynamic Address reconfiguration" which can be found also on the internet at the following address "http://tools.ietf.org/search/rfc5061" that a mechanism of acknowledgment is comprised in SCTP for reachability checking and for path verification purposes.

According to this mechanism a marker called "Heartbeat chunk" or "Heartbeat request" is inserted in data and sent by a first endpoint 1 to the second endpoint 2 for probing the reachability of a particular destination transport. The second endpoint sends in response a Heartbeat acknowledgment.

In case SCTP is used as multi-path protocol, the first endpoint 1 overrides the normal Heartbeat chunk sending behavior that would normally prevent sending Heartbeat control chunks as the path is already known to be usable. In other words, this means that the SCTP protocol stack is modified on the sender side in a way that a Heartbeat request is used as a marker and a Heartbeat acknowledgment is used as an acknowledgment.

When the Heartbeat Acknowledgement used as an acknowledgment HBAck1, HBAck2 is received by the first endpoint 1, it determines its precise arrival time t1, t2 which is a standard SCTP behavior.

This bitrate measurement can be used as an input for any scheduling algorithm such as, for example, Westwood-SCTP.

Then the invention can be implemented with any multi-path protocol in eventually adapting the sending behavior of any control message for allowing a bitrate measuring on a given path.

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

**Claims**

1. Method for evaluating an available bitrate (BR) over a path (P1, P2, P3) linking a first endpoint (1) and a second endpoint (2) at the first endpoint (1), **characterized in that** it involves a step of :

    - sending via said path (P1) successively a first marker (HB1), an amount (N) of data and a second marker (HB2), the first marker (HB1) and the second marker (HB2) being separated by said amount (N) of data;
    - receiving a first acknowledgment (HBAck1) sent by said second endpoint (2) via said path (P1) after said second endpoint (2) has received the first marker (HB1);
    - receiving a second acknowledgment (HBAck2) sent by said second endpoint (2) via said path (P1) after said second endpoint (2) has received the second marker (HB2);
    - measuring a first arrival time (t1) of the first acknowledgment (HBAck1) at the first endpoint (1);
    - measuring a second arrival time (t2) of the second acknowledgment (HBAck2) at the first endpoint (1);
    - evaluating the available bitrate (BR) from an interval between the second arrival time (t2) and the first arrival time (t1) and from the amount (N) of data.

2. Method according to claim 1, wherein the first endpoint (1) and the second endpoint (2) are connected by more than one path (P1, P2, P3) and a transport protocol is used for transporting data from the first endpoint (1) to the second endpoint (2) by said path (P1, P2, P3).

3. Method according to one of the claims 1 to 2, wherein independently of the sending of the first and second acknowledgment (HBAck1, HBAck2), the first endpoint (1) receives messages from said second endpoint (2) via at least one path (P1, P2, P3) for acknowledging reception of data.

4. Method according to one of the claims 2 to 3, wherein the transport protocol is SCTP.

5. Method according to claim 4, wherein said first and second marker (HB1, HB2) is a Heartbeat request and first and second acknowledgment (HBAck1, HBAck2) is a Heartbeat acknowledgment.

6. Device for evaluating an available bitrate (BR) over a path (P1) linking a first endpoint (1) and a second endpoint (2), said first endpoint (1) sending data over said path (P1) to said second endpoint (2), said second endpoint (2) being adapted for sending an acknowledgment (HBAck1, HBAck2) after it receives a marker (HB1, HB2) via said path (P1), **characterized in that** it comprises:

    - Means for inserting a first marker (HB1) in data before said data is sent to said second endpoint (2);
    - Means for inserting a second marker (HB2) in data before said data is sent to said second endpoint (2), said second marker (HB2) being separated from said first marker (HB1) by an amount (N) of data;
    - Means for determining a first arrival time (t1) at the first endpoint (1) of a first acknowledgment (HBAck1) sent by the second endpoint (2) after it received said first marker (HB1);
    - Means for determining a second arrival time (t1) at the first endpoint (1) of a second acknowledgment (HBAck2) sent by the second endpoint (2) after it received said second marker (HB2);
    - Means for evaluating the available bitrate (BR) from an interval between the first arrival time (t1) and the second arrival time (t2) and from the sent amount (N) of data.

7. Device according to the claim 6, wherein said first endpoint (1) uses SCTP for sending data to said second endpoint (2).

8. Device according to the claim 7, wherein said first marker (HB1) and said second marker (HB2) is a Heartbeat request and the first and second acknowledgment (HBAck1, HBAck2) is a Heartbeat acknowledgment.

Fig. 1

Fig. 2a

Fig. 2b

Fig. 2c

Fig. 2d

Europäisches
Patentamt
European
Patent Office
Office européen
des brevets

## EUROPEAN SEARCH REPORT

Application Number

EP 10 30 5378

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/232227 A1 (JORGENSON LOKI [CA] ET AL) 20 October 2005 (2005-10-20) | 1,6 | INV. H04L12/26 |
| Y | * paragraph [0031] - paragraph [0076] * <br> * figures 1,2,8-10 * <br> ----- | 2-5,7,8 | ADD. H04L12/56 |
| Y | Ho, Yu-Kun; Cheng, Qiao-Hung: "An Adaptive SCTP Congestion Control Scheme Based on Receiver Available Bandwidth Estimation" Feng Chia University <br><br> 7 August 2008 (2008-08-07), pages 1-12, XP002588379 Retrieved from the Internet: URL:http://dspace.lib.fcu.edu.tw/handle/2377/10881 [retrieved on 2010-06-23] * Chapter III. * <br> ----- | 2-5,7,8 | |
| A | US 7 583 677 B1 (MA QINGMING [US] ET AL) 1 September 2009 (2009-09-01) * column 3, line 10 - column 11, line 15 * <br> ----- | 1-8 | TECHNICAL FIELDS SEARCHED (IPC) <br><br> H04L |

The present search report has been drawn up for all claims

| Place of search | Date of completion of the search | Examiner |
|---|---|---|
| The Hague | 3 September 2010 | Engmann, Steffen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

**ANNEX TO THE EUROPEAN SEARCH REPORT
ON EUROPEAN PATENT APPLICATION NO.**                    EP 10 30 5378

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2010

| Patent document cited in search report | Publication date | Patent family member(s) | Publication date |
|---|---|---|---|
| US 2005232227 A1 | 20-10-2005 | NONE | |
| US 7583677 B1 | 01-09-2009 | NONE | |